# DEMANDE DE BREVET EUROPEEN

(11) **EP 4 841 146 A1**
(43) Date de publication de la demande: **18.11.2026**
(21) Numéro de dépôt: 26178875.6
(22) Date de dépôt: 15.05.2026
(51) Int. Cl.: F16L 37/18, F16L 37/56, F16L 37/32

(54) **SYSTÈME DE MULTI-CONNEXION**

(30) Priorité: 15.05.2025 FR 2505174
(71) Demandeur: Staubli Faverges, 74210 Faverges-Seythenex (FR)
(72) Inventeur: PERROUD, Jérôme, 74410 SAINT JORIOZ (FR); GUIN, Philippe, 74000 ANNECY (FR)
(74) Mandataire: Lavoix

(57) **Abrégé**

Un premier sous-ensemble (4) du système de multi-connexion comprend une première plaque (42), plusieurs éléments de raccord et deux pions (484). Un deuxième sous-ensemble (6) comprend une deuxième plaque (62), plusieurs éléments de raccord et un levier de manœuvre, avec deux platines (682') pourvues chacune d'une rainure de réception d'un pion. Les plaques (42, 62) sont dépourvues de moyens spécifiques de pré-positionnement. Une embouchure (642A) d'un élément de raccord femelle comprend une première portion de centrage (642B) présentant un premier diamètre (Φ1) et une deuxième portion d'étanchéité (642C) présentant un deuxième diamètre (Φ2) strictement inférieur au premier diamètre. Lorsque les platines (682') sont en position de dégagement et les pions (48) sont en butée contre des zones d'entrée des rainures, un nez tubulaire (442A) d'un élément de raccord mâle est reçu dans la première portion (642B) de l'embouchure (682A), sans être engagé dans la deuxième portion (642C) de cette embouchure.

## Description

La présente invention concerne un système de multi-connexion pour le raccordement simultané de circuits fluidiques, au moyen d'éléments de raccord mâles et femelles.

De façon préférentielle, l'invention vise le raccordement simultané de plusieurs circuits de thermo-régulation, c'est-à-dire de circuits dans lesquels circulent un ou plusieurs fluides caloporteurs.

Dans le domaine de la plasturgie, il est connu de regrouper sur une première plaque, souvent dénommée « plaque d'alimentation », des éléments de raccord femelles et, sur une deuxième plaque, souvent dénommée « plaque de réception », des éléments de raccord mâles, ceci afin de pouvoir raccorder, en une seule opération de rapprochement des première et deuxième plaques, plusieurs circuits de fluides de régulation thermique de moules d'injection plastique.

Généralement, la plaque d'alimentation regroupe entre quatre et douze éléments de raccord femelles raccordés à des circuits fluides, ainsi qu'un organe mâle de pré-positionnement, tel qu'une colonne centrale, et des moyens de rapprochement et de verrouillage des plaques en configuration de connexion des circuits fluides. De son côté, la plaque de réception, qui est généralement solidaire d'un moule d'injection, regroupe entre quatre et douze éléments de raccord mâles complémentaires des éléments de raccord femelles de la plaque d'alimentation et raccordés à des circuits fluides, ainsi qu'un organe femelle de pré-positionnement, tel qu'une douille de centrage, et des moyens de rapprochement et de verrouillage complémentaires des premiers moyens de rapprochement et de verrouillage de la plaque d'alimentation.

Lors de la connexion des éléments de raccord femelles et mâles respectivement supportés par la plaque d'alimentation et la plaque de réception, une première étape de pré-positionnement a lieu, au cours de laquelle l'opérateur dispose la plaque d'alimentation en vis-à-vis de la plaque de réception et les rapproche, de façon à aligner ces plaques sur un axe de raccordement. L'opérateur est aidé par la pénétration de l'extrémité de la colonne de centrage dans la douille de centrage. Dans une deuxième étape, l'opérateur procède au rapprochement des plaques, en actionnant les moyens de rapprochement. Au cours de cette étape, et en particulier au tout début de cette étape, les éléments de raccord femelles s'alignent avec les éléments de raccord mâles sous l'action des organes de centrage, puis les éventuelles soupapes de ces éléments de raccord sont repoussées pour ouvrir les circuits fluides. Le rapprochement des plaques lors de cette deuxième étape exige un effort relativement important de rapprochement. Cette exigence est pleinement satisfaite par le bloc de verrouillage du système de multi-connexion commercialisé par la société STAUBLI sous la référence RMI Multi, qui s'actionne grâce à un levier. Bien que donnant globalement satisfaction, ce bloc de verrouillage présente une emprise relativement importante sur la plaque d'alimentation et requiert un volume libre important pour permettre la manipulation du levier. Ceci tend à limiter la densité d'implantation des éléments de raccord sur les plaques d'alimentation et de réception.

D'autre part, il est connu de ITMI940559A1 d'équiper un système de multi-connexion d'un levier de manoeuvre comprenant deux platines latérales articulées sur l'une des plaques et solidarisées entre elles par une barrette. Chacune des platines présente une rainure de réception d'un pion solidaire de l'autre plaque. Ce levier de manœuvre n'a pas emprise sur la surface d'implantation des éléments de raccord. Dans ce système de multi-connexion connu, des colonnes et douilles de pré-positionnement et de guidage doivent être utilisées pour pré-positionner les éléments de raccord mâles et femelles les uns par rapport aux autres lors d'un mouvement d'approche des plaques d'alimentation et de réception. Ce système de multi-connexion reste encombrant, en particulier car la surface d'implantation des éléments de raccord doit être suffisamment grande pour y implanter, en plus des éléments de raccord, les deux colonnes de pré-positionnement, de guidage et de centrage et les douilles de pré-positionnement, de guidage et de centrage correspondantes, qui sont indispensables au positionnement correct des plaques lors du raccordement des circuits fluidiques correspondants.

Il est également connu de EP0390715B1 de prévoir sur deux plaques d'un connecteur fluidique multiple des rebords qui coopèrent entre eux pour guider l'une vers l'autre les deux plaques, lorsqu'elles sont rapprochées pour raccorder des éléments de connexion fluidiques mâles et femelles portés par ces plaques. Ces rebords induisent des problèmes d'encombrement analogues à ceux de ITMI940559A1.

C'est à ces inconvénients qu'entend plus particulièrement remédier l'invention en proposant un nouveau système de multi-connexion dont la compacité est améliorée par rapport aux matériels existants.

A cet effet, l'invention concerne un système de multi-connexion pour le raccordement simultané de circuits fluidiques suivant un axe de raccordement, au moyen d'éléments de raccord mâles et femelles, ce système de multi-connexion comportant un premier sous-ensemble incluant une première plaque, plusieurs premiers éléments de raccord implantés dans des logements de la première plaque et deux pions s'étendant le long d'un premier axe transversal perpendiculaire à l'axe de raccordement et disposés symétriquement sur deux côtés opposés de la première plaque. Le système de multi-connexion comporte également un deuxième sous-ensemble incluant une deuxième plaque, plusieurs deuxièmes éléments de raccord, complémentaires des premiers éléments de raccord, implantés dans des logements de la deuxième plaque et configurés pour se raccorder aux premiers éléments de raccord du premier sous-ensemble, afin de connecter entre eux les circuits fluidiques et un levier de manœuvre équipé de deux platines latérales articulées sur la deuxième plaque autour d'un axe d'articulation perpendiculaire à l'axe de raccordement, présentant chacune une rainure de réception et de coulissement d'un pion du premier sous-ensemble et mobiles en rotation autour de l'axe d'articulation, entre une position de verrouillage, dans laquelle les pions sont verrouillés dans les rainures et les circuits fluidiques sont connectées entre eux, et une position de dégagement, dans laquelle le premier sous-ensemble et le deuxième sous-ensemble peuvent être éloignés l'un de l'autre suivant l'axe de raccordement. Une extrémité distale de chaque élément de raccord mâle comprend un nez tubulaire cylindrique.

Conformément à l'invention, la première plaque et la deuxième plaque sont dépourvues de moyens spécifiques de pré-positionnement, de guidage ou de centrage d'un mouvement d'approche des première et deuxième plaques lors du raccordement des premier et deuxième sous-ensemble. Une embouchure d'un élément de raccord femelle comprend une première portion de centrage présentant un premier diamètre et une deuxième portion d'étanchéité présentant un deuxième diamètre, le deuxième diamètre étant strictement inférieur au premier diamètre. Lorsque les platines du levier de manoeuvre sont en position de dégagement et les pions sont en butée contre des zones d'entrée des rainures des platines, le nez tubulaire d'un élément de raccord mâle est reçu dans la première portion de l'embouchure d'un élément de raccord femelle, sans être engagé dans la deuxième portion de cette embouchure.

Grâce à l'invention, l'absence de moyens spécifiques de pré-positionnement, de guidage ou de centrage permet d'implanter les éléments de raccord mâles et/ou femelles avec une densité élevée. Ceci améliore la compacité du système de multi-connexion. En outre, les éventuels problèmes d'arcboutement sont résolus par le fait que l'embouchure de l'élément de raccord femelle comprend deux portions de diamètres différents, qui servent respectivement au pré-centrage de l'élément mâle et à la prise d'étanchéité. Dans la configuration où les platines sont en position de dégagement et les pions en butée contre les zones d'entrée des rainures, il n'y pas de risque de coincement ou d'arcboutement du nez d'un élément mâle dans l'embouchure de l'élément femelle car le diamètre de la première portion de centrage de l'embouchure peut être suffisamment grand pour permettre un éventuel défaut de centrage qui est rattrapé par l'action du levier de manœuvre lorsque les pions s'engagent dans les rainures des platines.

Selon des aspects avantageux mais non obligatoires de l'invention, un tel système de multi-connexion peut incorporer une ou plusieurs des caractéristiques suivantes, prise(s) selon toute combinaison techniquement admissible :
- Une surface d'un sous-ensemble qui est la plus éloignée d'une face frontale de la plaque de ce sous-ensemble est formée par une surface distale du nez d'un élément de raccord mâle ou par une surface distale de l'embouchure d'un élément de raccord femelle.
- Chaque platine comprend un bec qui délimite latéralement une embouchure de la rainure de la platine et dans lequel, lorsque le levier de manœuvre est en position de dégagement et en butée contre les pions du premier sous-ensemble, le bec de chaque platine est en appui contre un pion, en définissant une première valeur d'une distance d'écartement des première et deuxième plaques selon l'axe de raccordement.
- Les éléments de raccord sont montés avec un jeu radial dans les logements de la première plaque et/ou de la deuxième plaque. Le jeu radial entre les éléments de raccord et les logements permet un ajustement de la position des éléments de raccord par rapport aux première et deuxième plaques, en cours de raccordement.
- Les logements des deux plaques sont disposés de façon dissymétrique par rapport à un plan médian des plaques contenant l'axe transversal et l'axe de raccordement. La disposition dissymétrique des logements des deux plaques, donc des éléments de raccord qui y sont reçus, induit qu'il n'existe qu'un sens possible de connexion des sous-ensembles.
- Un élément de raccord femelle comprend une soupape rappelée en position de fermeture par un organe de rappel élastique et poussée en position d'ouverture par l'élément mâle complémentaire lorsque les platines du levier de manœuvre sont déplacées de leur position de dégagement vers leur position de verrouillage et, de préférence, un élément de raccord mâle comprend une soupape rappelée en position de fermeture par un organe de rappel élastique et poussée en position d'ouverture par l'élément femelle complémentaire, lorsque les platines du levier de manœuvre sont déplacées de leur position de dégagement vers leurs position de verrouillage. Le fait de disposer de soupapes dans les raccords du côté de l'ensemble d'alimentation évite de devoir vidanger les circuits fluidiques raccordés à cet ensemble lors de la déconnexion des éléments de raccord. Le fait de disposer de soupapes du côté de l'ensemble de réception évite de devoir vidanger les circuits fluidiques raccordés à ce sous-ensemble, lors d'une déconnexion.
- Au moins une articulation du levier de manœuvre sur la deuxième plaque est équipée de moyens de freinage de la rotation du levier de manœuvre autour de l'axe d'articulation. Grâce à cet aspect de l'invention, le levier de manœuvre est stable dans sa position de dégagement.
- Pour chaque couple d'éléments de raccord complémentaires, le logement d'implantation du premier élément de raccord dans la première plaque est identique au logement d'implantation du deuxième élément de raccord dans la deuxième plaque. La fabrication des première et deuxième plaques est ainsi facilitée.
- Les première et deuxième plaques sont identiques. Grâce à cet aspect de l'invention, le système de multi-connexion peut être facilement adapté à ses configurations d'utilisation.
- Les premiers éléments de raccord sont des éléments de raccord mâles et les deuxièmes éléments de raccord sont des éléments de raccord femelles ou bien les premiers éléments de raccord comprennent à la fois des éléments de raccord mâles et des éléments de raccord femelles et les deuxièmes éléments de raccord comprennent à la fois des éléments de raccord femelles et des éléments de raccord mâles. Grâce à cet aspect de l'invention, le système de multi-connexion peut être facilement adapté à ses configurations d'utilisation.
- La première plaque et la deuxième plaque portent chacune entre quatre et douze éléments de raccord. Grâce à cet aspect de l'invention, le système de multi-connexion est adapté à la plupart des configurations d'utilisation.
- Ce système de multi-connexion comporte un dispositif de détrompage pour l'orientation relative des première et deuxième plaques autour de l'axe de raccordement, ce dispositif de détrompage incluant deux bandeaux de formes complémentaires montés chacun sur un côté des première et deuxième plaques. Grâce à cet aspect de l'invention, la sécurité d'utilisation du système de multi-connexion est amélioré.
- Les pions sont fixés sur la première plaque, de préférence sur une tranche de cette plaque, et des organes matérialisant l'axe d'articulation des platines latérales sont fixés sur la deuxième plaque, de préférence sur une tranche de cette plaque.

L'invention sera mieux comprise et d'autres avantages de celle-ci apparaîtront plus clairement à la lumière de la description qui va suivre de plusieurs modes de réalisation d'un système de multi-connexion conforme à son principe, donnée à titre d'exemple et faite en référence aux dessins annexés dans lesquels :
[Fig. 1] la figure 1 est une vue en perspective d'un système de multi-connexion conforme à l'invention, dans une configuration en cours de rapprochement de deux sous-ensembles de ce système, selon un axe de raccordement.
[Fig. 2] la figure 2 est une vue en perspective du système de multi-connexion de la figure 1 en configuration accouplée de ses éléments de raccord.
[Fig. 3] la figure 3 est une vue d'extrémité du système des figures 1 et 2 dans le sens de la flèche III à la figure 1, lorsque le système est dans une configuration de pré-connexion, intermédiaire entre celles respectivement représentées aux figures 1 et 2.
[Fig. 4] la figure 4 est une vue partielle en coupe selon la ligne IV-IV à la figure 3.
[Fig. 5] la figure 5 représente sur deux inserts A) et B), des vues analogues aux figures 3 et 4, à plus petite échelle et lorsque le système est dans une configuration intermédiaire entre celle des figures 3 et 4 et celle de la figure 2.
[Fig. 6] la figure 6 représente sur deux inserts A) et B) des vues analogues à celle de la figure 5 lorsque le système est dans la configuration accouplée de la figure 2.
[Fig. 7] la figure 7 représente, sur l'insert A), une vue partielle en coupe selon la ligne VII sur l'insert A) de la figure 6 et, sur l'insert B), une coupe analogue à l'insert B) de la figure 6 pour un deuxième mode de réalisation.
[Fig. 8] la figure 8 représente, sur l'insert A), une vue partielle éclatée d'un système conforme à un troisième mode de réalisation de l'invention et, sur l'insert B), une vue analogue à la figure 1 pour un système conforme à un quatrième mode de réalisation.
[Fig. 9] la figure 9 représente une vue analogue à la figure 1 pour un système conforme à un cinquième mode de réalisation de l'invention ; et
[Fig. 10] la figure 10 représente, sur deux inserts A) et B), deux vues en perspective d'un système conforme à un sixième mode de réalisation de l'invention.

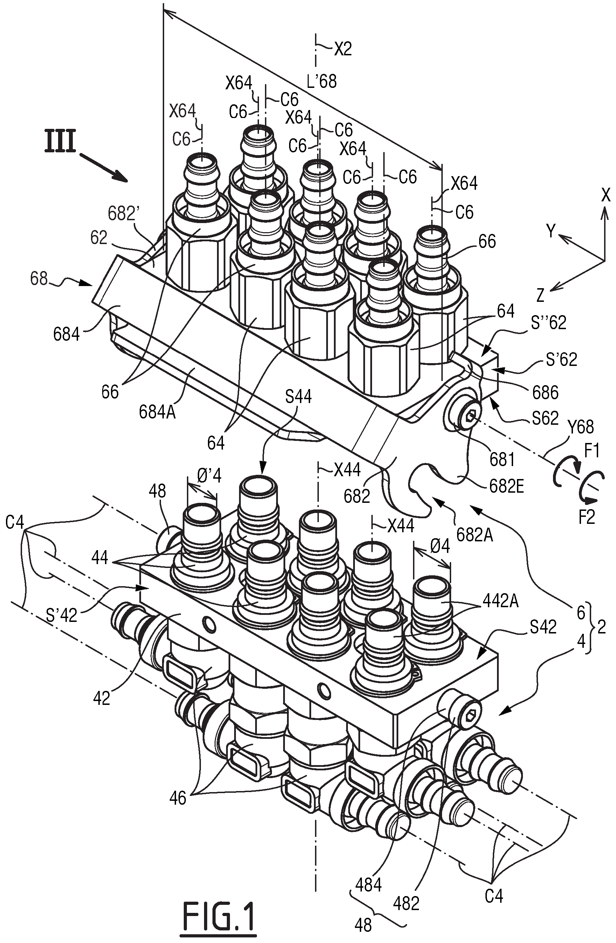

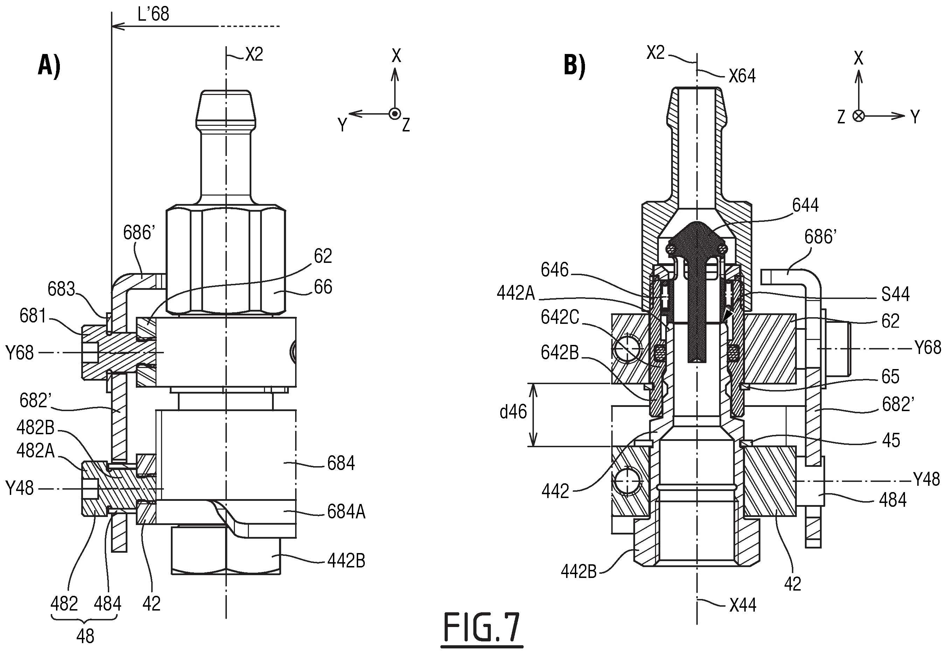

Le système de multi-connexion 2 représenté aux figures 1 à 6 et sur l'insert A) de la figure 7 comprend un sous-ensemble de réception 4 et un sous-ensemble d'alimentation 6 qui sont destinés à être rapprochés ou éloignés l'un de l'autre par une translation de l'un d'entre eux suivant un axe de raccordement X2.

On note XYZ un repère orthogonal associé au système de multi-connexion 2. L'axe de raccordement X2 est parallèle à l'axe des abscisses du repère XYZ, une direction transversale est parallèle à l'axe des ordonnées Y du repère XYZ. Une direction de profondeur est parallèle à l'axe Z du repère XYZ.

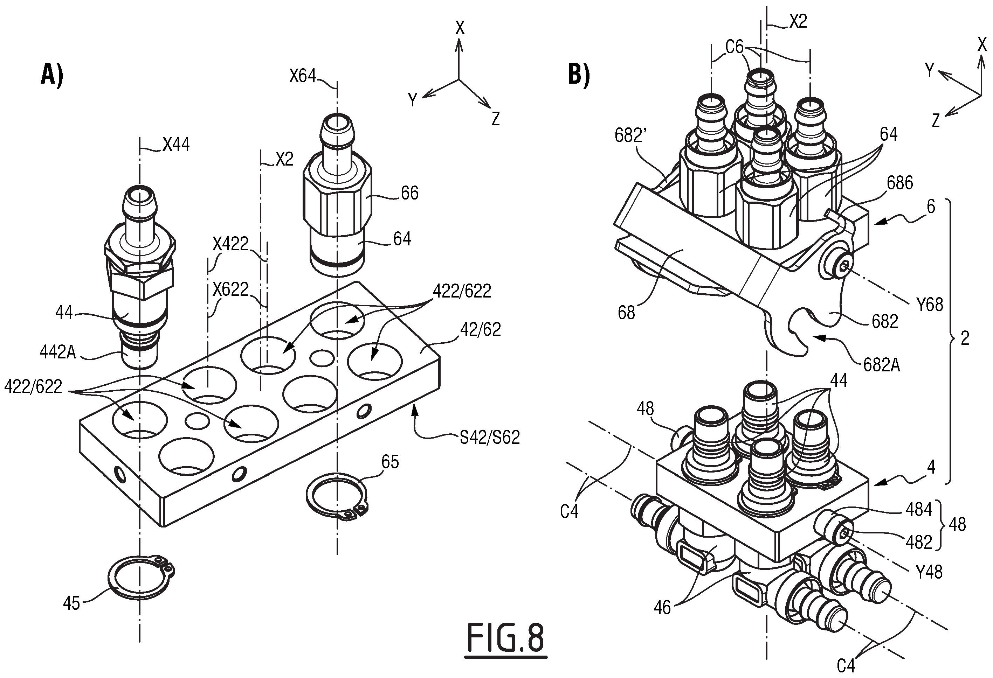

Le sous-ensemble de réception 4 comprend une première plaque plane 42 sur laquelle sont montés huit éléments de raccord mâles 44 répartis en deux rangées de quatre éléments de raccord qui s'étendent chacune transversalement, selon une direction parallèle à l'axe Y du repère XYZ. Chaque élément de raccord mâle 44 est reçu dans un logement 422 de la première plaque 42 qui est en forme d'alésage cylindrique à section circulaire, comme visible sur l'insert A) de la figure 8 pour les logements 422 du troisième mode de réalisation.

Chaque logement 422 est centré sur un axe de logement X422 parallèle à l'axe de raccordement.

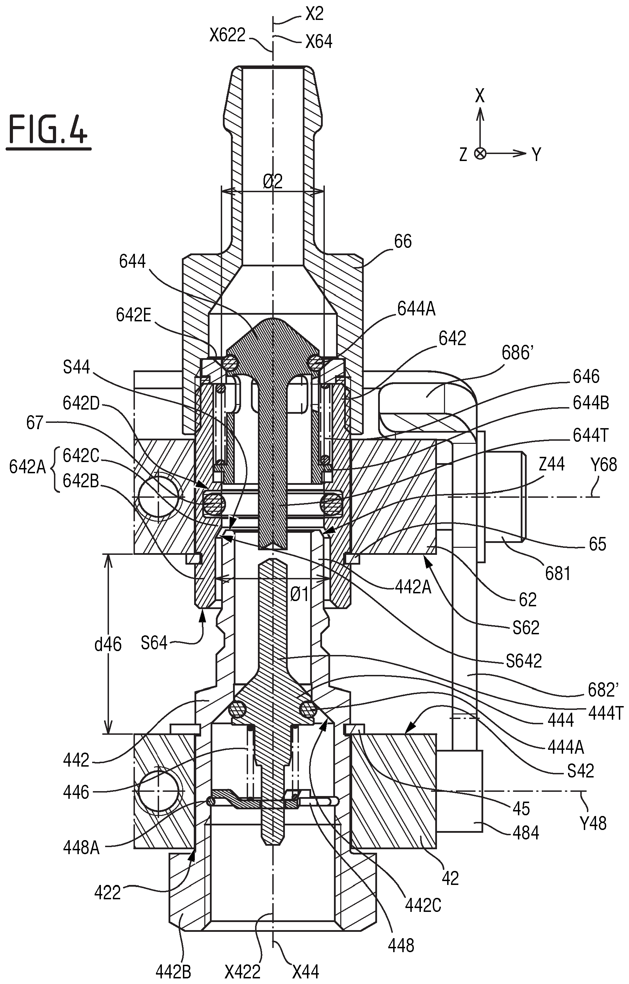

Chaque élément de raccord mâle 44 s'étend selon un axe longitudinal X44 est comprend un corps cylindrique à section circulaire 442 dont la partie reçue dans un logement 422 de la plaque 42 présente un diamètre légèrement inférieur au diamètre de ce logement. Ainsi, l'axe longitudinal X44 de chaque élément de raccord mâle 44 est parallèle et voisin de l'axe X422 du logement 422 dans lequel il est reçu. Chaque raccord 44 est monté dans un logement 422 de la plaque 42 avec une possibilité de mouvement, radial à l'axe longitudinal X44, d'amplitude déterminée par la différence des diamètres du logement 422 et du corps 442. Chaque élément de raccord mâle 44 est maintenu en position dans le logement 422 correspondant au moyen d'un circlip 45 compatible avec un mouvement du corps 442 dans le logement 422 correspondant, radialement à l'axe X44 et à l'axe X422. En configuration nominale de montage d'un élément de raccord mâle 44 dans un logement 422, les axes X44 et X422 sont confondus, comme représenté à la figure 4.

Chaque élément de raccord mâle est raccordé à un élément coudé 46 qui constitue une extrémité d'un circuit fluidique C4 d'acheminement d'un liquide caloporteur à des parties d'un moule d'injection non représenté.

Le corps 442 de chaque élément de raccord mâle 44 comprend un nez 442A qui constitue une extrémité distale de cet élément de raccord, ainsi qu'une partie taraudée 442B, opposée au nez 442A selon l'axe longitudinal X44 et qui est prévue pour y visser l'élément coudé 46.

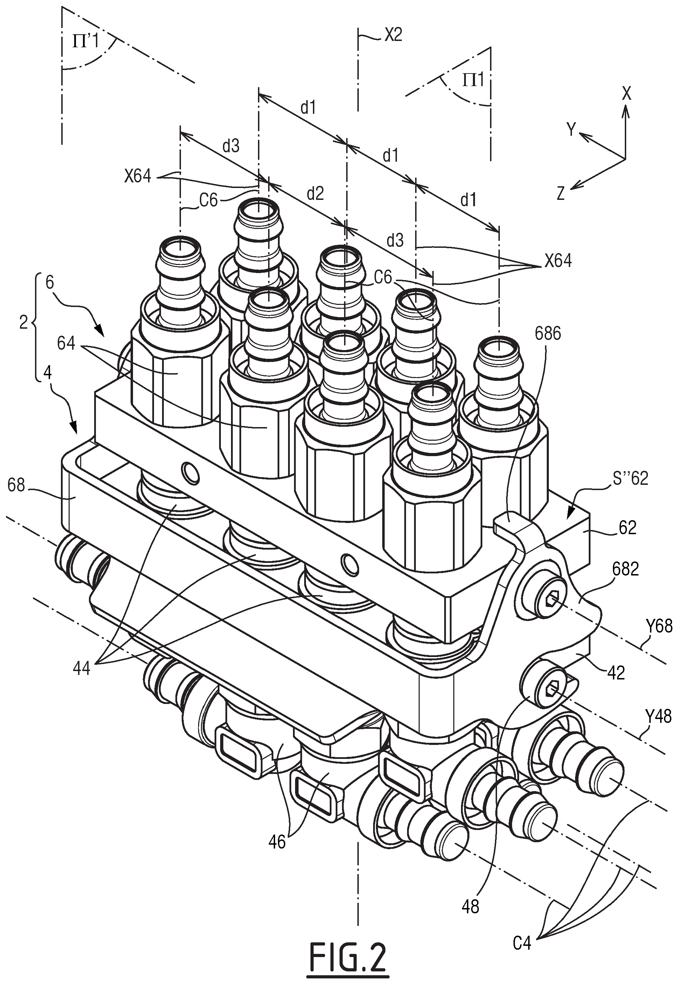

Pour la clarté du dessin, les éléments coudés 46 ne sont représentés qu'aux figures 1 et 2, de même que les conduits fluidiques C4.

Le nez 442A de chaque élément de raccord mâle 44 est tubulaire, à section circulaire centré sur l'axe longitudinal X44. Il définit une surface d'extrémité distale S44 de l'élément de raccord 44 auquel il appartient. Chaque surface d'extrémité distale S44 est annulaire, plane et à section circulaire centrée sur l'axe longitudinal X44 de l'élément de raccord mâle 44 considéré.

On note Φ4 un diamètre externe du nez 442A d'un élément de raccord mâle 44.

On note Φ'4 un diamètre interne du nez 442A d'un élément de raccord mâle, qui est le diamètre de passage de fluide dans les raccords formés des éléments de raccord mâle 44 et des éléments de raccord femelle correspondants, en configuration raccordée de ces éléments de raccord. Ici, le diamètre interne Φ'4 vaut environ 9 millimètres (mm).

On note S42 une surface frontale de la première plaque 42 tournée vers les nez 442A des éléments de raccord 44 qu'elle porte. La surface frontale S42 est tournée vers le sous-ensemble d'alimentation 6 lors du raccordement des sous-ensembles 4 et 6.

Chaque élément de raccord 44 comprend également une soupape 444 équipée d'un joint d'étanchéité 444A destiné à venir en appui contre un siège 442C formé par le corps 442, sous l'action d'un organe de rappel élastique 446 formé ici par un ressort en spirale en appui sur une base 448 immobilisée, le long de l'axe longitudinal X44, dans le corps 442 par un circlip 448A.

On note S'42 une surface périphérique de la plaque 42 qui est de forme rectangulaire et qui entoure la surface frontale S42. La surface périphérique S'42 comprend quatre côtés. A partir de deux côtés opposés de la surface périphérique S'42 s'étendent, dans deux directions opposées, deux pions 48 qui sont alignés sur un axe de transversal commun Y48 perpendiculaire à l'axe de raccordement X2 et parallèle à l'axe Y du repère XYZ. Les pions 48 sont disposés symétriquement sur deux côtés opposés de la première plaque 42. Ainsi, les pions 48 sont fixés sur la plaque 42, plus particulièrement sur la tranche de cette plaque définie par la surface S'42.

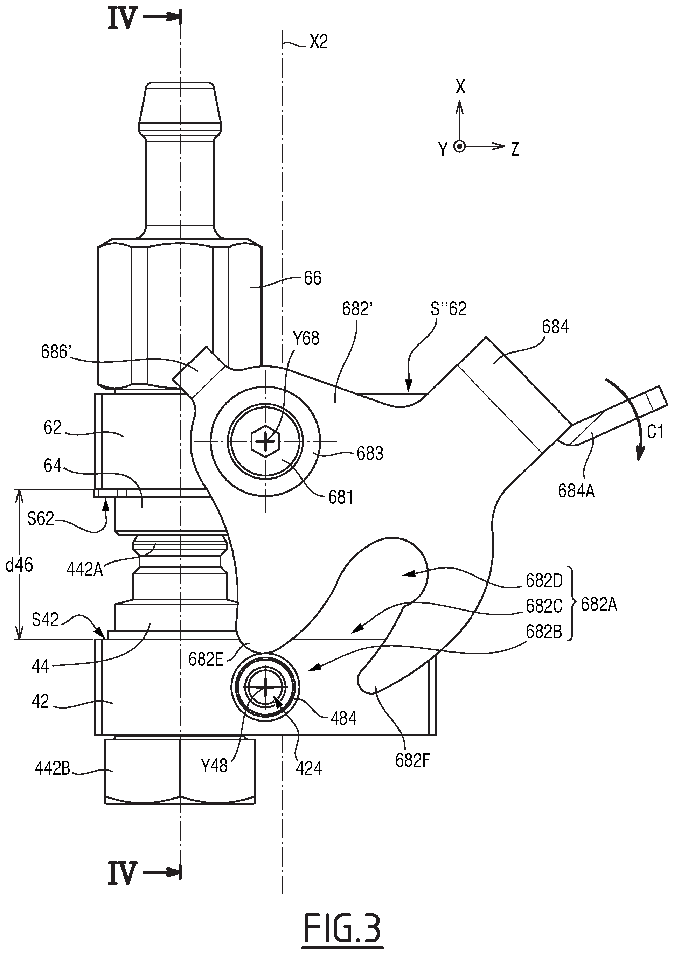

Chaque pion 48 est formé par une vis 482 à tête circulaire 482A et à empreinte creuse à six pans et par un manchon 484 monté autour de la tige 482B de la vis 482. Les vis 482 sont vissées dans deux taraudages 424 qui débouchent sur deux faces opposées de la plaque 42, correspondant à deux côtés opposés de la surface périphérique S'42, en l'occurrence ses plus petits côtés. Pour une meilleure lisibilité, les vis 482 ne sont pas représentées sur les figures 3, 4, 5, 6 et sur l'insert B) de la figure 7, où seuls les taraudages 424 et les manchons 484 sont visibles.

Le sous-ensemble de réception 4 est dépourvu de moyens spécifiques, autrement dit dédiés, de pré-positionnement, de guidage ou de centrage, tels que des tiges ou des douilles de pré-positionnement, de guidage ou de centrage destinées à coopérer avec le sous-ensemble d'alimentation 6. En particulier, la première plaque 42 ne porte pas d'organes de pré-positionnement spécifiques, ni d'organes de centrage spécifiques, ce qui libère la totalité de la surface frontale S42 pour y implanter des éléments de raccord mâles 44. Par spécifiques, on entend des organes qui ne serviraient qu'au pré-positionnement, au guidage et/ou au centrage des sous-ensembles 4 et 6 l'un par rapport à l'autre, comme les colonnes, les douilles et les rebords de l'art antérieur, qui ne sont pas présents dans le système de multi-connexion 2.

En particulier, en l'absence de moyens spécifiques de pré-positionnement, de guidage ou de centrage sur le sous-ensemble de réception 4, la surface d'extrémité distale S44 d'un élément de raccord mâle constitue la surface du sous-ensemble de réception 4 qui est la plus éloignée, de la surface frontale S42, selon l'axe de raccordement X2.

Le sous-ensemble d'alimentation 6 comprend une deuxième plaque plane 62 dont on note S62 la surface frontale tournée vers le sous-ensemble de réception 4 lors du raccordement des sous-ensembles 4 et 6. On note S'62 une surface périphérique de la plaque 62 qui est de forme rectangulaire, qui entoure la surface frontale S62 et qui comprend quatre côtés.

La deuxième plaque 62 porte huit éléments de raccord femelles 64 complémentaires des éléments de raccord mâles 44 et reçus chacun dans un logement 622 de la plaque 62 avec une possibilité de mouvement radial par rapport à un axe longitudinal X64 de l'élément de raccord femelle considéré, selon le même agencement que celui mentionné ci-dessus pour les éléments de raccord mâles 44 et les logements 422.

Chaque logement 622 est centré sur un axe de logement X622 parallèle à l'axe de raccordement.

Pour la clarté du dessin, un seul élément de raccord mâle et un seul élément de raccord femelle sont représentés sur les figures 3 à 6, ainsi que sur l'insert A) de la figure 7.

Chaque élément de raccord femelle 64 comprend un corps 642 tubulaire à section circulaire centré sur son axe longitudinal X64 et qui est retenu dans le logement correspondant 622 au moyen d'un circlip 65.

Le corps 642 de chaque élément de raccord femelle 64 définit une surface d'extrémité distale S64 de l'élément de raccord 64 auquel il appartient. Chaque surface d'extrémité distale S64 est annulaire, plane et à section circulaire centrée sur l'axe longitudinal X64 de l'élément de raccord femelle 64 considéré.

Le sous-ensemble d'alimentation 6 est également dépourvu de moyens spécifiques de pré-positionnement, de guidage ou de centrage, tels que des tiges, des douilles ou des rebords destinés à coopérer avec le sous-ensemble de réception 4. En particulier, la plaque 62 ne porte pas d'organes de pré-positionnement spécifiques, ni d'organes de centrage spécifiques, ce qui libère la totalité de la surface frontale S62 pour y implanter des éléments de raccord femelle 64.

En particulier, en l'absence de moyens spécifiques de pré-positionnement, de guidage ou de centrage sur le sous-ensemble d'alimentation, la surface d'extrémité distale S64 d'un élément de raccord femelle constitue la surface du sous-ensemble d'alimentation 6 qui est la plus éloignée de la surface frontale S62, selon l'axe d'emmanchement X2.

L'embouchure 642A du corps 642, par laquelle le nez 442A d'un élément de raccord mâle 44 pénètre dans le corps 642 lors du raccordement de ces éléments de raccord, présente une géométrie interne étagée en étant constituée d'une première portion 642B de centrage, dont on note Φ1 le diamètre interne, et d'une deuxième portion 642C d'étanchéité, dont on note Φ2 le diamètre intérieur.

Le diamètre Φ2 est strictement inférieur au diamètre Φ1.

En outre, le diamètre Φ1 est strictement supérieur au diamètre Φ4 d'un nez 442A d'élément de raccord mâle.

On note Δ1 une différence entre les diamètres Φ1 et Φ4. Pour un diamètre Φ'4 de l'ordre de 9 mm, cette différence est avantageusement comprise entre 0,1 et 0,5 mm.

En pratique, le diamètre Φ2 est légèrement supérieur au diamètre Φ4, ce qui permet une prise d'étanchéité entre le nez 442 d'un élément de raccord mâle 44 et l'embouchure 642A d'un élément de raccord femelle 64, au niveau de la deuxième portion 642C, lorsque le nez 442A est reçu dans la deuxième portion 642C.

Avantageusement, pour améliorer cette prise d'étanchéité, la deuxième portion 642C est équipée d'un joint torique d'étanchéité 67 reçu dans une gorge périphérique interne 642D de la deuxième portion 642C.

En variante non représentée, le joint d'étanchéité 67 peut avoir une forme autre que torique.

L'élément de raccord 64 comprend également une soupape 644 équipée d'un joint 644A destiné à venir en appui contre un siège 642E formé par le corps 642. La soupape 644 est ramenée par défaut dans une position de fermeture de l'élément de raccord femelle 64 par un organe de rappel élastique 646, qui est ici constitué d'un ressort en spirale en appui contre une bague interne 648 de l'élément de raccord femelle 64 et contre une collerette périphérique externe 644B de la soupape.

Un adaptateur 66 est rapporté sur chaque élément de raccord femelle 66, ce qui permet d'y raccorder un tuyau d'un circuit fluidique C6.

Les circuits fluidiques C4 et C6 et les éléments de raccord 44 et 64 sont compatibles avec la circulation de fluides liquides ou gazeux.

Les circuits fluidiques sont représentés, uniquement sur les figures 1 et 2, par des traits d'axe.

Avantageusement, tous les éléments de raccord mâles 44 sont identiques, de même que tous les éléments de raccord femelles 64. Ainsi, la description qui précède pour un élément de raccord mâle 44 est générique des éléments de raccord mâles et la description qui précède d'un élément de raccord femelle 64 est générique des éléments de raccord femelles.

Avantageusement, pour chaque couple d'éléments de raccord complémentaires 44 et 64, le logement 422 d'implantation de l'élément de raccord mâle 44 dans la première plaque 42 est identique au logement 622 d'implantation de l'élément de raccord femelle 64 de la deuxième plaque 62.

Avantageusement, les première et deuxième plaques 42 et 62 sont identiques, ce qui est avantageux en termes de coût de production, de facilité d'approvisionnement et de gestion de pièces détachées.

Le fait que chacun des éléments de raccord mâles et femelles 44 et 64 est équipé d'une soupape 444, respectivement 644, permet d'assurer que, à la déconnexion des éléments de raccord des sous-ensembles 4 et 6, les circuits fluides C4 et C6 respectivement raccordés à ces éléments de raccord sont isolés de l'extérieur. Ceci évite l'écoulement de fluides à l'extérieur des circuits fluidiques.

Les alésages qui constituent les logements 422 et 622 sont disposés sur deux rangées parallèles aux axes Y48 et Y68. Sur la première rangée située en arrière des figures 1 et 2, ces logements sont équidistants. Ainsi, les axes longitudinaux X64 des éléments de raccord femelles 64 de la première rangée sont séparés deux à deux d'une même distance d1, mesurée parallèlement à l'axe Y68.

D'autre part, les logements 422 et 622 de la deuxième rangée ne sont pas équidistants. Les axes longitudinaux X64 des éléments de raccord femelles 64 disposés sur la deuxième rangée sont séparés deux à deux d'une distance qui peut prendre deux valeurs d2 et d3 différentes. Par exemple, la distance d2 entre les deux axes longitudinaux X64 des deux éléments de raccord femelles 64 de la deuxième rangée est strictement inférieure à la distance d3 entre l'axe longitudinal X64 de l'un des éléments de raccord femelles 64 centraux et l'axe longitudinal X64 d'un élément de raccord femelle 64 situé en bout de rangée.

La distance d3 peut être égale à la distance d1 mais ceci n'est pas obligatoire.

Comme les plaques 42 et 62 sont identiques, la répartition des logements 422 et la répartition des axes longitudinaux X44 des éléments de raccord mâles 44 sont également différentes, entre les première et deuxième rangées d'éléments de raccord mâles.

On note 111 un plan médian d'une des plaques 42 ou 62 perpendiculaire à l'axe Y48 ou Y68 et équidistant des portions de la surface S'42 ou S'62 à partir desquelles s'étendent les pions 48. La répartition des logements 422 et 622 est symétrique par rapport au plan Π1. On note Π'1 un plan médian des plaques 42 et 62 perpendiculaire au plan Π1. Le plan médian Π'1 contient l'axe transversal Y48 et un axe d'articulation Y68 mentionné ci-après, lorsque les éléments de raccord sont raccordés. Le plan médian Π'1 contient également l'axe de raccordement X2. Les logements 422 et 622 sont disposés de façon dissymétrique par rapport au plan Π'1.

Grâce à cette disposition des logements 422 et 622, il n'est pas possible de se tromper de sens lorsque l'on raccorde les éléments de raccord mâles et femelles 44 et 64 des sous-ensembles 4 et 6, en rapprochant les première et deuxième plaques 42 et 62 en translation selon l'axe de raccordement X2. En effet, si la plaque 62 était tournée de 180° autour de l'axe de raccordement X2 par rapport à sa position de la figure 1, alors les éléments de raccord femelles 64 de la première rangée seraient disposés en regard des éléments de raccord mâles 44 de la deuxième rangée et vice-versa. Compte tenu de la différence des distances d1, d2 et d3, ceci rendrait impossible un raccordement des éléments de raccord.

Le sous-ensemble d'alimentation 6 comprend également un levier de manœuvre 68 articulé sur la deuxième plaque 62 autour d'un axe transversal Y68. Lorsque les éléments de raccord 44 et 64 sont en cours de raccordement ou raccordés, les axes Y48 et Y68 sont parallèles.

Le levier de manœuvre 68 comprend deux platines 682 et 682' articulées sur la deuxième plaque 62 autour de l'axe Y68 et qui sont solidarisées entre elles par une barrette 684 à partir de laquelle s'étend une patte d'actionnement 684A. Chaque platine 682 ou 682' se prolonge en direction de l'autre platine par une butée 686, respectivement 686', qui vient en appui contre une surface arrière S"62 de la deuxième plaque 62, qui est opposée à sa surface frontale S62. En venant en appui contre la surface arrière S"62, les butées 686 et 686' limitent une rotation du levier de manœuvre 68 autour de l'axe Y68 dans le sens de la flèche F1 à la figure 1.

Avantageusement, le levier de manœuvre 68 est formé par découpage et pliage d'une plaque de tôle. Ainsi, le levier de manœuvre 68 est robuste et son prix de revient est faible.

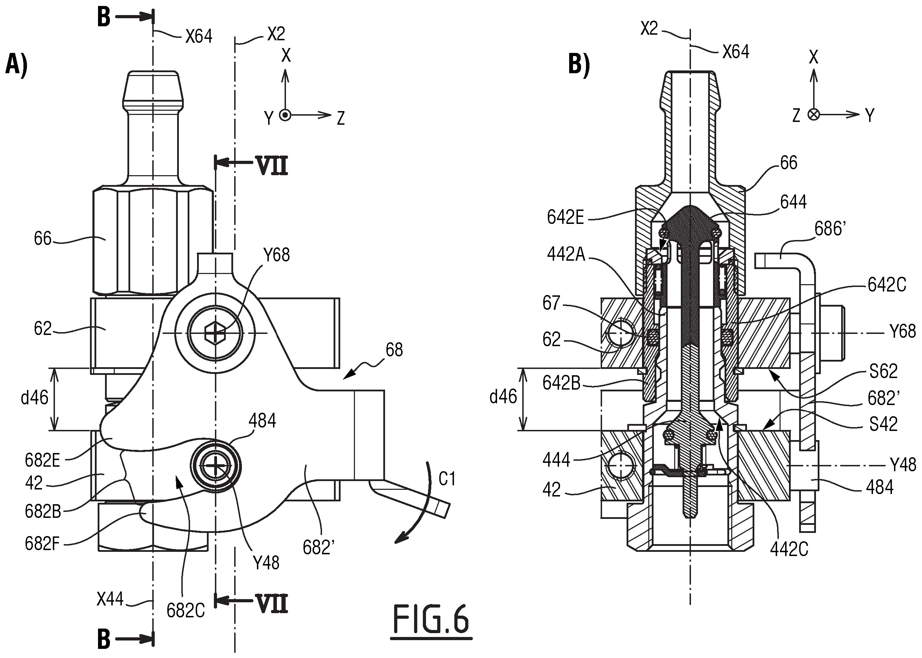

Chaque platine 682 ou 682' comprend une rainure 682A de réception et de coulissement d'un des pions 48 lors d'un mouvement de basculement du levier de manœuvre 68 autour de l'axe Y68 dans le sens de la flèche F2 à la figure 1, entre une position de dégagement représentée aux figures 1, 3 et 4 et une position de verrouillage représentée aux figures 2 et 6.

Chaque rainure 682A est globalement en forme d'arc de cercle centré sur l'axe Y68 et comprend une embouchure 682B, une partie courante 682C et un siège terminal 682D. L'embouchure 682A est définie en largeur entre un bec 682E et une pointe 682F. En particulier, le bec 682E délimite latéralement l'embouchure 682A, sur un côté de celle-ci.

L'axe d'articulation Y68 est matérialisé par deux vis 681, qui sont avantageusement du même type que les vis 482 et qui sont vissées dans deux côtés opposés de la surface S'62, en l'occurrence ses plus petits côtés. Ainsi les vis 681 sont fixées sur la plaque 62, plus particulièrement sur la tranche de cette plaque définie par la surface S'62. Les moyens de montage et d'articulation du levier de manœuvre 68 sur la deuxième plaque 62 comprennent également deux rondelles 683 interposées entre les têtes des vis 681 et les platines 682 et 682'.

On note L68 une longueur, mesurée entre les platines 682 et 682' en configuration non contrainte du levier de manœuvre 68, c'est-à-dire lorsque ce levier de manœuvre n'est pas monté sur la deuxième plaque 62.

On note par ailleurs L'68 une longueur, mesurée entre les platines 682 et 682' parallèlement à l'axe d'articulation Y68, lorsque le levier de manœuvre 68 est monté sur la deuxième plaque 62. La longueur L'68 est strictement inférieure à la longueur L68. En d'autres termes, le levier de manœuvre 68 est monté sous contrainte axiale entre les rondelles 683, lesquelles constituent des moyens de freinage du levier de manœuvre 68 dans sa rotation autour de l'axe d'articulation Y68. En effet, lorsqu'il est monté sur la deuxième plaque 62, le levier de manœuvre 68 est déformé élastiquement et son élasticité génère une pression de contact sur les rondelles 683, cette pression de contact ayant pour effet de freiner le levier de manœuvre en rotation autour de l'axe d'articulation Y68.

En variante, d'autres moyens de freinage du levier de manœuvre 68 en rotation autour de l'axe d'articulation Y68 peuvent être prévus, tels que l'utilisation de rondelles élastiques mises en lieu et place des rondelles 683. En outre, les moyens de freinage peuvent être prévus au niveau d'une seule platine 682 ou 682'.

Du fait du freinage du levier de manœuvre 68, celui-ci reste dans la position angulaire dans laquelle il est amené par un utilisateur et n'a pas tendance à pivoter de façon intempestive, notamment sous l'effet de son propre poids, qui aurait tendance à exercer sur le levier de manœuvre 68 un couple dans le sens de la flèche F2 à la figure 1.

Dans ces conditions, le levier de manœuvre 68 reste dans la position représentée à la figure 1 lorsqu'il a été poussé par un utilisateur jusqu'à amener les butées 686 et 686' en appui contre la surface S"62.

Dans cette position, dite position de dégagement, les sous-ensembles 4 et 6 peuvent être éloignés l'un de l'autre selon l'axe de raccordement X2 ou, au contraire, rapprochés l'un de l'autre.

Selon une variante non représentée de l'invention, en plus de ou à la place des moyens de freinage précités, des moyens de rappel élastique du levier de manœuvre dans sa position de dégagement peuvent être incorporés au sous-ensemble d'alimentation 6.

Lorsqu'il convient de raccorder les éléments de raccord mâles 44 et femelles 64 du sous-ensemble de réception 4 et du sous-ensemble d'alimentation 6, le sous-ensemble d'alimentation 6 est rapproché du sous-ensemble d'alimentation 4 par une translation selon l'axe de raccordement X2 avec le levier de manœuvre 68 dans la position représentée à la figure 1, ce qui a pour effet d'amener chacune des platines 682 et 682' en appui par son bec 682E sur un manchon 684 de l'un des pions 48, dans la configuration représentée aux figures 3 et 4. Dans cette configuration où les pions 48 sont en butée par leurs manchons 484 contre des zones d'entrée des rainures 682A formées par les becs 682E, une distance d'écartement d46 entre les surfaces S42 et S62 des première et deuxième plaques 42 et 62, est fixée à une première valeur qui dépend de la géométrie des platines 682 et 682', ainsi que du positionnement des pions 48 et de l'axe d'articulation Y68.

Dans cette configuration, les nez 442A des éléments de raccord mâles 44 sont engagés dans les embouchures 642A des éléments de raccord femelles 64 en pénétrant dans la première portion 642B de ces embouchures, sans être engagés dans la deuxième portion 642C de ces embouchures.

Comme représenté à la figure 4, le nez 442A d'un élément de raccord mâle 44 est reçu dans l'embouchure 642A d'un élément de raccord femelle 64 sans être en contact avec la surface interne de cette embouchure, du fait de la différence entre les diamètres Φ1 et Φ4. Ainsi, en cas de léger défaut d'alignement entre les axes X44 et X64, il n'y a pas d'arcboutement entre les corps 442 et 642.

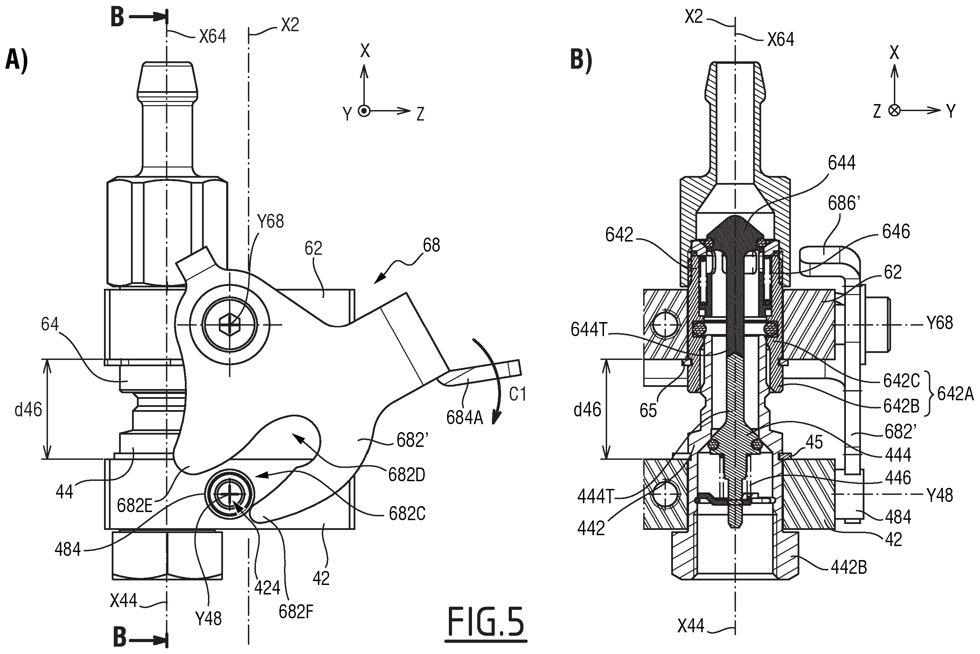

Lorsqu'un utilisateur exerce sur la patte d'actionnement 684A de la barrette 684 un couple autour de l'axe Y68 représenté par la flèche C1 à la figure 3, ceci a pour effet d'engager les rainures 682A des platines 682 et 682' autour des pions 48, donc de faire pénétrer les pions dans les parties courantes 682C et de rapprocher les surfaces S42 et S62 pour atteindre la configuration de la figure 5, où la distance d'écartement d46 a une deuxième valeur, strictement inférieure à celle de la configuration des figures 3 et 4. Dans la configuration de la figure 5, le nez 442A d'un élément de raccord mâle 44 est engagé dans la deuxième portion 642C de l'embouchure 642A d'un élément de raccord femelle 64, comme représenté sur l'insert B) de la figure 5.

Les deux soupapes 444 et 644 sont encore en appui, par leurs joints 444A et 644A, sur leurs sièges respectifs 442C et 642E, ce qui signifie que les deux éléments de raccord 44 et 64 sont encore fermés, même si les tiges 444T et 644T de ces deux soupapes sont en contact l'une avec l'autre.

Une surface interne de transition S642 entre les première et deuxième portions 642B et 642C de l'embouchure 642A est tronconique et convergente en direction de la deuxième portion 642C, alors qu'une zone de transition Z44 entre la surface d'extrémité distale S44 et la surface périphérique externe courante du nez 442A est chanfreinée. La coopération de la surface tronconique S642 de l'élément de raccord femelle 64 et de la zone chanfreinée Z44 de l'élément de raccord mâle 44 permet de guider progressivement le nez 442A vers la deuxième portion 642C de l'embouchure 642A, y compris en cas de désalignement entre les axes X44 et X64, lors du passage de la configuration des figures 3 et 4 à la configuration de la figure 5. Ceci induit, le cas échéant, un réalignement des axes X44 et X64, ce qui est possible grâce à un mouvement radial des corps 442 et 642 des éléments de raccord 44 et 64 au sein des logements 422 et 622, comme expliqué ci-dessus.

La poursuite du pivotement du levier de manœuvre sous l'effet du couple C1 déplace les platines 682 et 682' par rapport aux pions 48, qui parviennent dans les sièges terminaux 682D au terme de ce pivotement, comme représenté à la figure 6. Dans cette configuration, les tiges 644T et 644T poussent les soupapes 644 et 444 en position ouverte.

Dans cette configuration, le levier de manœuvre 68 est dans une position de verrouillage, dans laquelle les pions 48 sont verrouillés dans les rainures 682A, au niveau des sièges terminaux 682D. Les plaques 42 et 62 ne peuvent pas être écartées l'une de l'autre selon l'axe de raccordement X2. Les circuits fluidiques C4 et C6 sont connectés entre eux.

Lors du passage de la configuration des figures 3 et 4 à la configuration de la figure 6, en passant par la configuration de la figure 5, la distance d46 est progressivement diminuée. Par exemple, cette distance peut passer d'une première valeur égale à 22 mm dans la configuration des figures 3 et 4 à une deuxième valeur égale à 20 mm dans la configuration de la figure 5, puis à une troisième valeur égale à 13 mm dans la configuration de la figure 6. Cette diminution de la distance d'écartement d46 a pour effet de faire pénétrer progressivement le nez 442A de chaque élément de raccord 44 dans la deuxième portion 642C de l'embouchure 642A d'un élément de raccord femelle correspondant 64, ce qui permet une prise d'étanchéité entre la surface périphérique externe du nez 442A et la deuxième portion 642C, notamment grâce au joint d'étanchéité 67.

Dans les deuxième à sixième modes de réalisation, les éléments analogues à ceux du premier mode de réalisation portent les mêmes références. Si une référence est utilisée dans la suite de la description sans être portée sur une figure ou portée sur une figure sans être mentionnée dans la description, elle désigne le même élément que celui portant la même référence dans le premier mode de réalisation. Dans ce qui suit, on décrit principalement ce qui distingue les deuxième à sixième modes de réalisation du premier mode de réalisation.

Dans le deuxième mode de réalisation représenté sur l'insert B) de la figure 7, l'élément mâle de raccord 44 est dépourvu de soupape. En d'autres termes, lors de la déconnexion des sous-ensembles 4 et 6, seul les circuits fluidiques C6 sont isolés de l'extérieur. Les première et deuxième plaques 42 et 62 et l'élément de raccord femelle 64 sont identiques à ceux du premier mode de réalisation.

Ici la surface d'extrémité distale S44 de l'élément de raccord mâle 44 vient au contact de la soupape 644 de l'élément de raccord femelle 64 pour la manœuvrer dans un sens d'ouverture, à l'encontre de l'action d'un organe de rappel élastique 646, ici un ressort en spirale.

Le troisième mode de réalisation représenté sur l'insert A) de la figure 8 diffère des précédents en ce que chacun des sous-ensembles de réception comprend à la fois des éléments de raccord mâles 44 et des éléments de raccord femelles 64, ce qui est représenté pour seulement deux d'entre eux. En d'autres termes, dans ce cas, le sous-ensemble de réception 4 et le sous-ensemble d'alimentation 6 comprennent chacun une plaque 42 ou 62 dans les logements 422 ou 622 de laquelle sont montés des éléments de raccord mâles 44 et des éléments de raccord femelles 64.

Dans le quatrième mode de réalisation représenté sur l'insert B) de la figure 8, le nombre d'éléments de raccord 44 ou 64 de chaque sous-ensemble de réception 4 et 6 est égal à quatre.

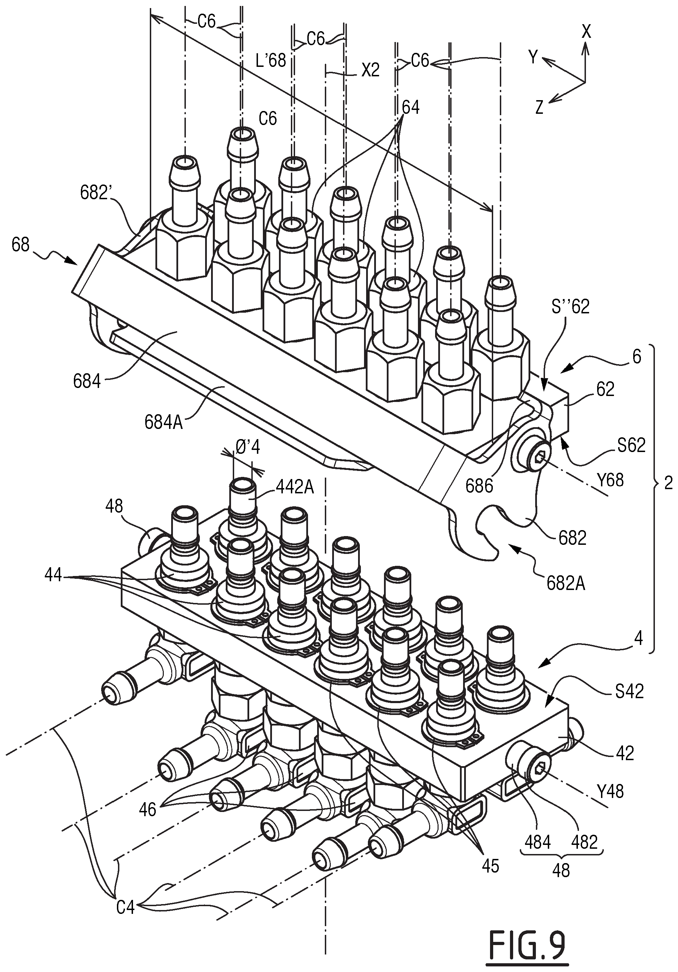

Dans le cinquième mode de réalisation représenté à la figure 9, le nombre d'éléments de raccord 44 ou 64 de chaque sous-ensemble 4 ou 6 est égal à douze.

Dans le cinquième mode de réalisation, le diamètre interne Φ'4 du nez 442A d'un élément de raccord mâle 44 vaut 6 mm environ.

Dans le sixième mode de réalisation, un dispositif de détrompage 70 est incorporé au système de multi-connexion 2 et comprend un premier bandeau 74 fixé sur une portion longitudinale de la surface périphérique S'42 de la plaque 42 et un deuxième bandeau 76 de forme complémentaire fixé sur une portion longitudinale de surface périphérique S'62 de la deuxième plaque 62.

Le premier bandeau 74 est pourvu d'une entaille 742 de réception d'une dent 762 formée sur un bord du deuxième bandeau 76 tourné vers le sous-ensemble de réception 4 lorsque les sous-ensembles 4 et 6 sont rapprochés selon l'axe de raccordement X2 pour le raccordement des éléments de raccord mâles 44 et femelles 64.

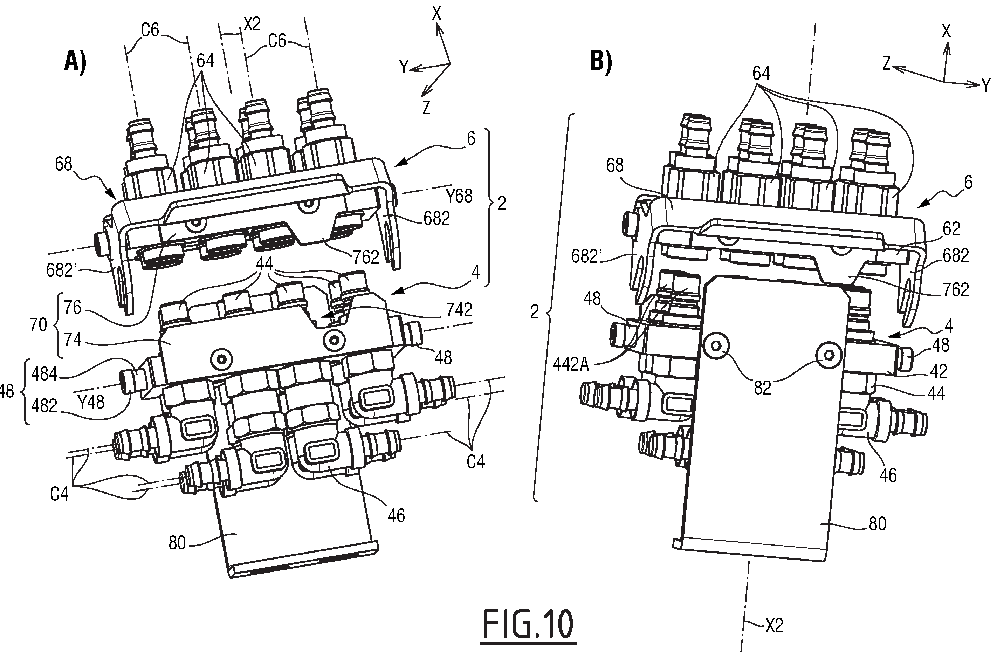

Lorsque les plaques 42 et 62 sont correctement orientées l'une par rapport à l'autre autour de l'axe de raccordement X2, comme représenté sur l'insert A) de la figure 10, la dent 762 du deuxième bandeau 76 peut être reçue dans l'entaille 742 du premier bandeau 74. Le dispositif de détrompage ne s'oppose pas au raccordement des éléments de raccord mâles 44 et femelles 64.

En revanche, si l'orientation des première et deuxième plaques est inversée, comme représenté sur l'insert B) de la figure 10 où le sous-ensemble de réception est tourné de 180° autour de l'axe de raccordement X2 par rapport à la configuration de l'insert A), la dent 762 du deuxième bandeau vient en appui contre un support 80 sur lequel est montée la première plaque 62 au moyen de deux vis 82, ce support servant au montage du sous-ensemble de réception 4 sur le corps d'un moule d'injection non représenté.

Ainsi, dans la configuration de l'insert B) de la figure 10, il n'est pas possible de raccorder entre eux les éléments de raccord 44 et 64.

En variante, le premier bandeau 74 peut être monté sur la deuxième plaque 62, alors que le deuxième bandeau 76 est monté sur la première plaque 42.

L'invention est représentée sur les figures dans le cas où le sous-ensemble 4 est le sous-ensemble de réception et le sous-ensemble 6 est le sous-ensemble d'alimentation. Toutefois, l'inverse est possible.

L'invention trouve une application particulièrement avantageuse dans le domaine de la plasturgie, pour le raccordement de circuits de fluides caloporteurs permettant de contrôler la température de moules d'injection. Elle est toutefois applicable dans tous les domaines industriels impliquant des fluides liquides ou gazeux pour la production de biens, la manutention ou la régulation de température.

Les caractéristiques techniques mentionnées ci-dessus pour un mode de réalisation ou une variante peuvent être appliquées aux autres modes de réalisation et variantes, pour autant que ceci est techniquement possible.

## Revendications

1. **Système** de multi-connexion (2) pour le raccordement simultané de circuits fluidiques (C4, C6) suivant un axe de raccordement (X2), au moyen d'éléments de raccord mâles (44) et femelles (64),
ce système comportant
- un premier sous-ensemble (4) incluant
∘ une première plaque (42) ;
∘ plusieurs premiers éléments de raccord (44) implantés dans des logements (422) de la première plaque ;
∘ deux pions (48) s'étendant le long d'un premier axe transversal (Y48) perpendiculaire à l'axe de raccordement (X2) et disposés symétriquement sur deux côté opposés de la première plaque ;
- un deuxième sous-ensemble (6) incluant
∘ une deuxième plaque (62) ;
∘ plusieurs deuxièmes éléments de raccord (64), complémentaires des premiers éléments de raccord (44), implantés dans des logements (622) de la deuxième plaque et configurés pour se raccorder aux premiers éléments de raccord du premier sous-ensemble (4), afin de connecter entre eux les circuits fluidiques (C4, C6);
∘ un levier de manoeuvre (68) équipé de deux platines latérales (682, 682') articulées sur la deuxième plaque (62) autour d'un axe d'articulation (Y68) perpendiculaire à l'axe de raccordement (X2), présentant chacune une rainure (682A) de réception et de coulissement d'un pion (48) du premier sous-ensemble et mobiles en rotation autour de l'axe d'articulation (Y68), entre une position de verrouillage, dans laquelle les pions (48) sont verrouillés dans les rainures (682A) et les circuits fluidiques (C4, C6) sont connectées entre eux, et une position de dégagement, dans laquelle le premier sous-ensemble (4) et le deuxième sous-ensemble (6) peuvent être éloignés l'un de l'autre suivant l'axe de raccordement ;
une extrémité distale de chaque élément de raccord mâle (44) comprenant un nez tubulaire cylindrique (442A) ;
**caractérisé en ce que**
- la première plaque (42) et la deuxième plaque (62) sont dépourvues de moyens spécifiques de pré-positionnement, de guidage ou de centrage d'un mouvement d'approche des première et deuxième plaques lors du raccordement des premiers et deuxième sous-ensemble (4, 6);
- une embouchure (642A) d'un élément de raccord femelle (64) comprend une première portion de centrage (642B) présentant un premier diamètre (Φ1) et une deuxième portion d'étanchéité (642C) présentant un deuxième diamètre (Φ2) ;
- le deuxième diamètre (Φ2) est strictement inférieur au premier diamètre (Φ1) ; et
- lorsque les platines (682, 682') du levier de manœuvre (68) sont en position de dégagement et les pions (48) sont en butée contre des zones d'entrée (682E) des rainures (682A) des platines, le nez tubulaire (442A) d'un élément de raccord mâle (44) est reçu dans la première portion (642B) de l'embouchure (682A) d'un élément de raccord femelle (64), sans être engagé dans la deuxième portion (642C) de cette embouchure.

2. Système de multi-connexion selon la revendication 1, dans lequel une surface (S44, S64) d'un sous-ensemble (4, 6) qui est la plus éloignée d'une face frontale (S42, S62) de la plaque (42, 62) de ce sous-ensemble est formée par une surface distale du nez (442) d'un élément de raccord mâle (44) ou par une surface distale de l'embouchure (642A) d'un élément de raccord femelle (64).

3. Système de multi-connexion selon l'une des revendications précédentes, dans lequel chaque platine (682, 682') comprend un bec (682E) qui délimite latéralement une embouchure (682B) de la rainure (682A) de la platine et dans lequel, lorsque le levier de manœuvre (68) est en position de dégagement et en butée contre les pions (48) du premier sous-ensemble (4), le bec (682E) de chaque platine (682, 382') est en appui contre un pion (48), en définissant une première valeur d'une distance d'écartement (d46) des première et deuxième plaques (42, 62) selon l'axe de raccordement (X2).

4. Système de multi-connexion selon l'une des revendications précédentes, dans lequel les éléments de raccord (44, 64) sont montés avec un jeu radial dans les logements (422, 622) de la première plaque (42) et/ou de la deuxième plaque (62).

5. Système de multi-connexion selon l'une des revendications précédentes, dans lequel les logements (422, 622) des deux plaques (42, 62) sont disposés de façon dissymétrique (d1, d2, d3) par rapport à un plan médian (Π'1) des plaques contenant l'axe transversal (Y48) et l'axe de raccordement (X2).

6. Système de multi-connexion selon l'une des revendications précédentes, dans lequel un élément de raccord femelle (64) comprend une soupape (644) rappelée en position de fermeture par un organe de rappel élastique (646) et poussée en position d'ouverture par l'élément mâle complémentaire (44) lorsque les platines (682, 682') du levier de manœuvre sont déplacées de leur position de dégagement vers leurs position de verrouillage et, de préférence, un élément de raccord mâle (44) comprend une soupape (444) rappelée en position de fermeture par un organe de rappel élastique (446) et poussée en position d'ouverture par l'élément femelle complémentaire (64), lorsque les platines du levier de manœuvre sont déplacées de leur position de dégagement vers leurs position de verrouillage.

7. Système de multi-connexion selon l'une des revendications précédentes, dans lequel au moins une articulation (681, 683) du levier de manœuvre sur la deuxième plaque (62) est équipée de moyens (683) de freinage de la rotation du levier de manœuvre (68) autour de l'axe d'articulation (Y68).

8. Système de multi-connexion selon l'une des revendications précédentes, dans lequel pour chaque couple d'éléments de raccord complémentaires, le logement (422) d'implantation du premier élément de raccord (44) dans la première plaque (42) est identique au logement (622) d'implantation du deuxième élément de raccord (64) de la deuxième plaque (62).

9. Système de multi-connexion selon la revendication 8, dans lequel les première et deuxième plaques (42, 62) sont identiques.

10. Système de multi-connexion selon l'une des revendications précédentes, dans lequel les premiers éléments de raccord sont des éléments de raccord mâles (44) et les deuxièmes éléments de raccord sont des éléments de raccord femelles (64) ou bien les premiers éléments de raccord comprennent à la fois des éléments de raccord mâles (44) et des éléments de raccord femelles (64) et les deuxièmes éléments de raccord comprennent à la fois des éléments de raccord femelles (64) et des éléments de raccord mâles (44).

11. Système de multi-connexion selon l'une des revendications précédentes, dans lequel la première plaque (42) et la deuxième plaque (62) portent chacune entre quatre et douze éléments de raccord (44, 64).

12. Système de multi-connexion selon l'une des revendications précédentes, comportant un dispositif de détrompage (70) pour l'orientation relative des première et deuxième plaques (42, 62) autour de l'axe de raccordement (X2), ce dispositif de détrompage incluant deux bandeaux (74, 76) de formes complémentaires montés chacun sur un côté des première et deuxième plaques.

13. Système de multi-connexion selon l'une des revendications précédentes, dans lequel les pions (48) sont fixés sur la première plaque (42), de préférence sur une tranche (S'42) de cette plaque, et dans lequel des organes (681) matérialisant l'axe d'articulation (Y68) des platines latérales (682, 682') sont fixés sur la deuxième plaque (62), de préférence sur une tranche (S'62) de cette plaque.
